# EUROPEAN PATENT SPECIFICATION

(11) **EP 3 289 328 B1**
(45) Date of publication and mention of the grant of the patent: **08.11.2023**
(21) Application number: 16728251.6
(22) Date of filing: 27.05.2016
(51) Int. Cl.: G01L 1/16, G01L 9/00, G01L 23/22

(54) **SIGNAL TRANSDUCTION DEVICE**
SIGNALWANDLER
DISPOSITIF TRANSDUCTION DE SIGNAL

(30) Priority: 28.05.2015 IT UB20151059
(43) Date of publication of application: 07.03.2018
(73) Proprietor: ITT Italia S.r.l., 20020 Lainate (MI) (IT)
(72) Inventor: DONZELLI, Daniele, 10062 Luserna San Giovanni (Torino) (IT); SOLARI, Mattia, 10062 Luserna San Giovanni (TO) (IT); TERRANOVA, Marco, 10149 Torino (IT); SERRA, Stefano, 20028 San Vittore Olona (Milano) (IT); MARTINOTTO, Luca, 20025 Legnano (Milano) (IT)
(74) Representative: Rapisardi, Mariacristina
(86) International application number: PCT/EP2016/062013
(87) International publication number: WO 2016/189137

(56) References cited:
- EP-A1- 1 530 037
- US-A1- 2006 179 952
- US-A1- 2009 157 358
- US-A1- 2009 157 358
- US-B1- 7 124 639

## Description

The present invention relates to a signal transduction device suitable for operating in very harsh physical boundary conditions, particularly with reference to intense thermal and mechanical type stresses.

The use of piezoelectric sensors for the transduction of a signal is well known in many sectors.

Piezoelectric sensors exploit the property of some crystalline materials of polarizing themselves generating a potential difference when they are subjected to mechanical deformation and deforming themselves in an elastic way when a current passes through them.

Among the most common applications that make use of piezoelectric sensors are cooker gas igniters, seismic instruments, acoustic and musical instruments, pressure detectors, time detectors, microphones, sound generators, motion actuators, ultrasonic probes, etc.

The use of piezoelectric sensors has spread mainly in areas where high resistance to the thermal and mechanical stresses found in nature is not required. The patent documents US7124639B1, US2006/179952 and US2009/157358 all disclose signal transduction devices having various implementations of protective coatings.

The purpose of the present invention is to provide a signal transduction device of the piezoelectric type capable of operating also under conditions of high thermal and mechanical stress.

Another purpose of the present invention is to provide a signal transduction device of the piezoelectric type that is suitable for use in various industrial applications. Not least, the purpose of the present invention is to provide a signal transduction device of the piezoelectric type that is simple, robust, precise and reliable in operation. These and other purposes are achieved by a signal transduction device according to the invention as defined in claim 1.

Preferably the protective coating of the claimed signal transduction device is formed from a material comprising a resin or a ceramic material.

The signal transduction device according to the invention can be used in an environment having a temperature of no less than 200°C.

The signal transduction device according to the present invention can be advantageous in any application involving high temperatures and pressure (at least potentially).

The high temperature technology coupled with the screen printing technology, sensor, and welding pastes derived from the sensorized braking pad technology provides the high temperature resistance to the application.

The adoption of specific material for the protective coating ensures the robustness with respect the pressure application.

Concerning this latter point, according to the invention, the use of material for the protective coating with elastic modules smaller than those typical of the piezoceramic materials will imply a damping effect lowering the applied forces to the piezoceramic sensor.

This in an important aspect to be considered for all the cases that, due to the high load applied, would require to increase the dimension of the piezoceramic sensor to withstand to such large applied load while keeping the real applied load on the piezoceramic sensor well below its critical mechanical rupture limit.

In the opposite direction an amplification effect increasing the applied forces to the piezoceramic sensor will be obtained in cases when a harder material for the protective coating will be used. This will be advantageous in any case where an amplification is required because forces to be measured are too small or piezoceramic sensor sensitivity is not enough to cover the whole range of measured values.

The typical applications, when a damping effect is required, are the pressure sensor for oil extraction plants, where pressures and temperatures can be very high, or rather in the automotive sector with pressure sensor for the injection control of the engines. Here again pressures and temperatures are extremely high. The advantage would be to have smaller and cheaper sensors but keeping a good sensitivity in the range of pressures to be measured for these specific applications.

The typical applications, when an amplification effect is required, may be in the biomedical sector where comparable sensitivities can be reached by smaller pressure sensors with lower costs.

Among the various possible applications, the signal transduction device according to the invention can preferably be integrated into a strength meter or a linear movement actuator, for example the actuator of a tool of a machine for hot-working a part, or a vibrator.

Further characteristics and advantages of the present invention will become clear from the following description of an exemplary non-limiting embodiment given purely by way of example and with reference to the drawings attached, in which:

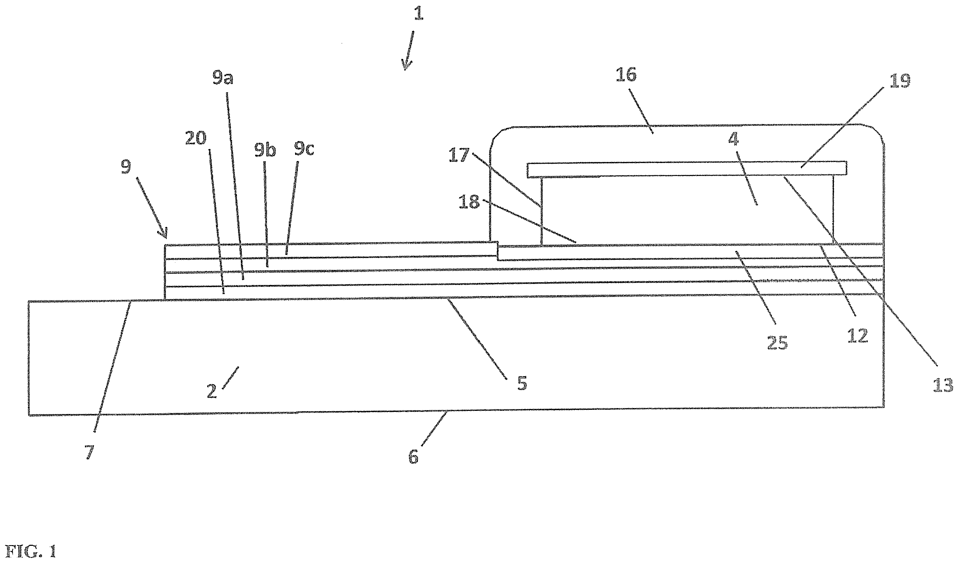

- Figure 1 illustrates a section of a signal transduction device.
   With reference to the figures a signal transduction device is referenced as a whole with 1;
- Figures 2a, 2b and 2c show schematically a method of application of the protective layer by Dam&Fill technique.

The signal transduction device 1 comprises a flat plate-like support element 2 and one or more piezoceramic sensors 4 supported by the support element 2.

In the case shown and below reference will be made, without limitation, to cases in which there will be a single piezoceramic sensor 4.

The piezoceramic sensor 4 is supported in a raised arrangement on the support element 2.

The support element 2 supports an electrically isolated electric circuit 9 that has electrical contacts that are connected to the electrodes of the piezoceramic sensor 4. The piezoceramic sensor 4 is made of piezoceramic materials with a Curie temperature greater than 200°C, and is formed of a preferably cylindrical body that is polarized in the direction of its axis and delimited by a pair of opposite flat faces 12 and 13 that are arranged in use parallel to the main planar surfaces of the support element 2.

Preferably both electrodes of the piezoceramic sensor 4 are obtained on the face of the piezoceramic sensor 4 facing the electric circuit 9.

Specific examples of piezoceramic sensors 4 that may be used are for instance PIC 255 (Manufacturer: PI Ceramic), PIC 300 (Manufacturer: PI Ceramic), PIC 181 (Manufacturer: PI Ceramic), PIC 050 (Manufacturer: PI Ceramic), TRS BT200 (Manufacturer: TRS Ceramics), PZT5A1 (Manufacturer: Morgan Advanced Ceramic), PZT5A3 (Manufacturer: Morgan Advanced Ceramic). Advantageously the piezoceramic sensor 4 has an integral protective coating 16 being in direct or indirect contact with the support element 2 perimetrally to the piezoceramic sensor 4 itself.

The integral protective coating 16 is located on the support element 2 at the position of the piezoceramic sensor 4.

The integral protective coating 16 is configured to direct a predetermined part of an external compression force onto an area of the support element 2 surrounding said piezoceramic sensor 4.

The integral protective coating 16 has an internal direct or indirect contact surface 17 uniform with the external surface of the piezoceramic sensor 4 and a uniform direct or indirect rest base 18 on said support element 2.

The integral protective coating 16 in particular has a dome shape.

The integral protective coating 16 is preferably made from a resin-based material, for example polyimide resins, epoxy resins (loaded or not), Bismaleimide resins and Cyanate-Ester resins, but ceramic materials that are much harder than resins and suitable for temperatures above 350°C may also be used.

The integral protective coating 16 has electrical and thermal insulation properties. The thermal and electrical insulation properties can be conferred by the constituent material or by a specific layer or an appropriate constituent element of the integral protective coating 16.

In the illustrated case the integral protective coating 16 comprises a main body made of electrically insulating material within which an element made from thermally insulating material 19 is located.

The integral protective coating 16 therefore thermally shields the piezoceramic sensor 4 from external heat in such a way that the piezoceramic sensor 4 can function under less onerous operating conditions from the point of view of temperature. Various materials can be used for such purposes such as the so-called thermal barrier (TBC) materials, or else Yttria or Magnesium stabilized Zirconia in the form of mastics, coatings with ceramic compounds or special paints.

In addition the integral protective coating 16 shields the piezoceramic sensor 4 from external electrical disturbance.

The support element 2 is covered with a thermally insulating layer 20 upon which the piezoceramic sensor 4 is arranged.

The thermally insulating layer 20 in particular is interposed between the support element 2 and the electric circuit 9.

Typical materials usable for thermal insulating layers 20 are for instance YSZ (Yittria Stabilized Zirconia), Mullite (Al₄₊₂ₓSi₂₋₂ₓO_{10-x) ,} ), α-phase Al2O3 in conjuction with YSZ, , CeO2 + YSZ, Rare-earth zirconates like La2Zr2O7, Rare earth oxides like La2O3, Nb2O5, Pr2O3, CeO2, Metal-Glass Composites.

The signal transduction device construction method is as follows.

The thermally insulating layer 20 is initially applied to the support element 2.

The electrically isolated electric circuit 9 is then integrated with the support element 2. The electrically isolated electric circuit 9 is preferably constructed by means of the screen printing technique.

A lower screen printed layer 9a made from an electrically insulating material is first deposited onto the thermally insulating layer 20, an intermediate screen printed layer 9b made from an electrically conductive material is then deposited onto the lower screen printed layer 9a, thus defining the actual electrical circuit itself, an upper screen printed layer 9c made from an electrically insulating material is then deposited onto the intermediate screen printed layer 9b which leaves the contacts uncovered for the electrical connection of the piezoceramic sensor 4.

The insulating layers 9a, 9c consist, for example, of a base made of alumina/graphite particles (or a silicate matrix) optionally immersed in a matrix of a polymeric nature (preferably polyimide), while the conductive layer 9b consists of silver or palladium screen printing pastes.

The sensor is then integrated being electrically and mechanically connected to the electrical contacts of the electric circuit 9.

The piezoceramic sensor 4 is permanently connected by means of its two electrodes to the respective contacts by means of a layer 25 composed of welding paste which is electrically conductive at high temperature. In practical terms, once the electrical circuit 9 has been formed, this high temperature welding paste layer is applied to the area of the contacts and/or of the electrodes, after which the sensor is positioned by matching its two electrodes with the counterpart contacts provided by the electrical circuit 9. Finally the assembly is cured typically at around 200°C depending upon and in accordance with the specifications of the welding paste used, which is preferably composed of silver as the base element of the electrically conductive component. In principle, depending upon the choice of welding paste, temperatures in the order of 800°C can be reached.

At this point the sensor 4 is coated with the related protective element 16 for example by means of the dripping of material at standard pressure and moderate temperatures of less than 200°C.

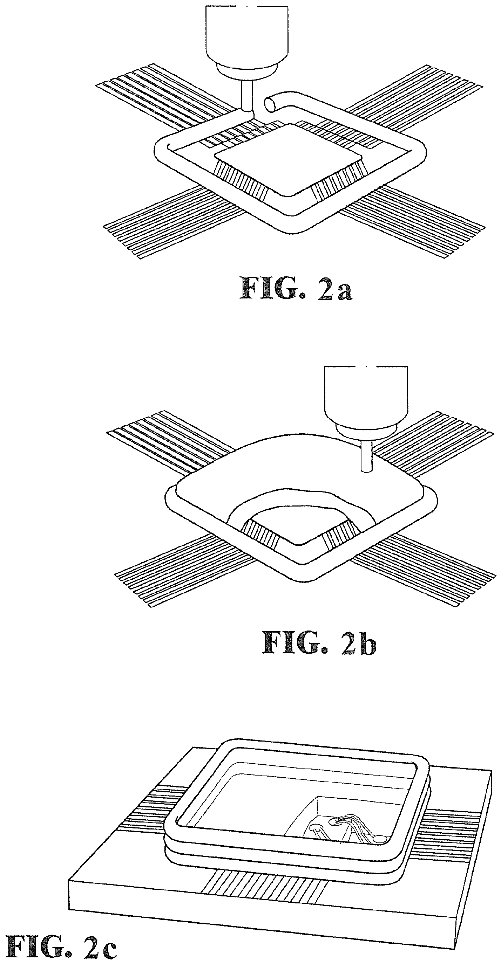

With particular reference to figures 2a, 2b and 2c, a method to apply the protective element 16 to the piezoelectric sensor is the following. The resin for the protective element 16 is deposited by a dispenser for resin material, preferably with an automatic dispenser. Specially for resins with a low level of thixotropy Dam&Fill technique is recommended: a ring of a sacrificial thixotropy resin is made first around the sensor in order to build a kind of dam to enclose the resin used for making the protective element 16. Then the material for protective element 16 is used to fill up the dam in order to cover the sensor.

The signal transduction device thus conceived is capable of operating in extreme environmental conditions thanks to its special construction which ensures suitable thermal and electrical insulation and that guarantees the integrity of the piezoceramic sensor, which is suitably protected by its coating, said coating being capable of deflecting at least part of the external compression forces towards the area of the support element surrounding the piezoceramic sensor.

The applications of the signal transduction device thus conceived and described above can be extended to all fields of technology where a conventional piezoelectric transduction device may not function due to prohibitive environmental boundary conditions.

## Claims

1. Signal transduction device (1) comprising at least one piezoceramic sensor (4) supported in a raised arrangement on a flat plate like support element (2) in turn supporting an electrically insulated electric circuit (9) upon which said piezoceramic sensor (4) is mounted, said at least one piezoceramic sensor (4) featuring an integral protective coating (16) having properties of mechanical strength and temperature resistance, **characterized in that** said integral protective coating (16):
- has electrical and thermal insulation properties;
- thermally shields said piezoceramic sensor (4) from external heat;
- electrically shields said piezoceramic sensor (4) from external electrical disturbance;
- comprises a main body made of electrically insulating material to which an element (19) made of thermally insulating material is applied;
- is in direct or indirect contact with said support element (2) perimetrally to said piezoceramic sensor (4) so as to direct a predetermined part of an external compression force acting on said piezoceramic sensor (4) onto an area of the support element (2) surrounding said piezoceramic sensor (4);
- the material of which the protective coating (16) is made has elastic module smaller than that of the material of which the piezoceramic sensor (4) is made so providing a damping effect lowering said external compression force applied to the piezoceramic sensor;
and **in that** a thermally insulating layer (20) is interposed between said support element (2) and said electrically insulated circuit (9).

2. The signal transduction device (1) according to claim 1, **characterized in that** said protective coating (16) is formed from a material comprising a resin or a ceramic material.

3. The signal transduction device (1) according to claim 2, **characterized in that** said resin-based material is selected from polyimide resins, epoxy resins, Bismaleimide resins and Cyanate-Ester resins.

4. The signal transduction device (1) according to claim 1, **characterized in that** said protective element (16) is located at the site of said piezoceramic sensor (4).

5. The signal transduction device (1) according to claim 1, **characterized in that** said protective coating (16) has a dome shape.

6. A use of a signal transduction device according to any preceding claim, in an environment having a temperature of no less than 200°C.

7. A use of a signal transduction device according to any one of the preceding claims 1 to 5 in a strength meter or in a linear movement actuator.

## Patentansprüche

1. Signalübertragungsvorrichtung (1), umfassend mindestens einen piezokeramischen Sensor (4), der in einer erhöhten Anordnung auf einem flachen plattenartigen Trägerelement (2) unterstützt wird, das seinerseits einen elektrisch isolierten elektrischen Schaltkreis (9) trägt, auf dem der genannte piezokeramische Sensor (4) montiert ist. Der mindestens eine piezokeramische Sensor (4) ist mit einer integralen Schutzbeschichtung (16) versehen, die Eigenschaften von mechanischer Festigkeit und Temperaturbeständigkeit aufweist, **gekennzeichnet durch** die Tatsache, dass diese integrale Schutzbeschichtung (16):
· elektrische und thermische Isolationseigenschaften besitzt;
· den piezokeramischen Sensor (4) vor äußerer Hitze thermisch abschirmt;
· den piezokeramischen Sensor (4) vor äußeren elektrischen Störungen elektrisch abschirmt;
· aus einem Hauptkörper aus elektrisch isolierendem Material besteht, auf den ein Element (19) aus thermisch isolierendem Material aufgebracht ist;
· direkt oder indirekt mit dem Trägerelement (2) am Umfang des piezokeramischen Sensors (4) in Kontakt steht, um einen vorbestimmten Teil einer äußeren Druckkraft, die auf den piezokeramischen Sensor (4) wirkt, auf einen Bereich des Trägerelements (2) um den piezokeramischen Sensor (4) herum zu lenken;
· das Material, aus dem die Schutzbeschichtung (16) hergestellt ist, einen elastischen Modul aufweist, der kleiner ist als der des Materials, aus dem der piezokeramische Sensor (4) hergestellt ist, und somit eine Dämpfungswirkung erzeugt, die die auf den piezokeramischen Sensor ausgeübte äußere Druckkraft verringert;
und eine thermisch isolierende Schicht (20) zwischen dem Trägerelement (2) und dem elektrisch isolierten Schaltkreis (9) eingeschlossen ist.

2. Die Signalübertragungsvorrichtung (1) nach Anspruch 1, **gekennzeichnet durch** die Tatsache, dass die Schutzbeschichtung (16) aus einem Material besteht, das Harz oder keramisches Material enthält.

3. Die Signalübertragungsvorrichtung (1) nach Anspruch 2, **gekennzeichnet durch** die Tatsache, dass das harzbasierte Material aus Polyimidharzen, Epoxidharzen, Bismaleimidharzen und Cyanat-Esterharzen ausgewählt ist.

4. Die Signalübertragungsvorrichtung (1) nach Anspruch 1, **gekennzeichnet durch** die Tatsache, dass das Schutzelement (16) sich am Ort des piezokeramischen Sensors (4) befindet.

5. Die Signalübertragungsvorrichtung (1) nach Anspruch 1, **gekennzeichnet durch** die Tatsache, dass die Schutzbeschichtung (16) eine Kuppelform hat.

6. Verwendung einer Signalübertragungsvorrichtung gemäß einem der vorherigen Ansprüche in einer Umgebung mit einer Temperatur von nicht weniger als 200°C.

7. Verwendung einer Signalübertragungsvorrichtung gemäß einem der vorherigen Ansprüche 1 bis 5 in einem Festigkeitsmesser oder in einem Linearantrieb für Bewegungen.

## Revendications

1. Dispositif de transduction de signaux (1) comprenant au moins un capteur piézocéramique (4) soutenu dans un arrangement surélevé sur un élément de support de type plaque plate (2) supportant à son tour un circuit électrique isolé (9) sur lequel ledit capteur piézocéramique (4) est monté, ledit au moins un capteur piézocéramique (4) comportant un revêtement protecteur intégral (16) ayant des propriétés de résistance mécanique et de résistance à la température, **caractérisé par le fait que** ledit revêtement protecteur intégral (16) :
- possède des propriétés d'isolation électrique et thermique ;
- protège thermiquement ledit capteur piézocéramique (4) de la chaleur extérieure ;
- protège électriquement ledit capteur piézocéramique (4) des perturbations électriques extérieures ;
- comprend un corps principal en matériau électriquement isolant sur lequel est appliqué un élément (19) en matériau thermiquement isolant ;
- est en contact direct ou indirect avec ledit élément de support (2) périmétriquement audit capteur piézocéramique (4) de manière à diriger une partie prédéterminée d'une force de compression externe agissant sur ledit capteur piézocéramique (4) sur une zone de l'élément de support (2) entourant ledit capteur piézocéramique (4) ;
- le matériau dont est constitué le revêtement protecteur (16) a un module élastique inférieur à celui du matériau dont est constitué le capteur piézocéramique (4), ce qui permet d'obtenir un effet d'amortissement abaissant ladite force de compression externe appliquée au capteur piézocéramique ;
et en ce qu'une couche thermiquement isolante (20) est interposée entre ledit élément de support (2) et ledit circuit électriquement isolé (9).

2. Dispositif de transduction de signaux (1) selon la revendication 1, **caractérisé en ce que** ledit revêtement protecteur (16) est formé d'un matériau comprenant une résine ou un matériau céramique.

3. Dispositif de transduction de signaux (1) selon la revendication 2, **caractérisé par le fait que** le matériau à base de résine est choisi parmi les résines polyimides, les résines époxy, les résines bismaléimides et les résines cyanate-ester.

4. Le dispositif de transduction de signaux (1) selon la revendication 1, **caractérisé en ce que** ledit élément de protection (16) est situé à l'emplacement dudit capteur piézocéramique (4).

5. Le dispositif de transduction de signaux (1) selon la revendication 1, **caractérisé en ce que** ledit revêtement protecteur (16) a une forme de dôme.

6. Utilisation d'un dispositif de transduction de signaux selon l'une quelconque des revendications précédentes, dans un environnement dont la température n'est pas inférieure à 200°C.

7. Utilisation d'un dispositif de transduction de signal selon l'une quelconque des revendications précédentes 1 à 5 dans un compteur de force ou dans un actionneur de mouvement linéaire.
